# DEMANDE DE BREVET EUROPEEN

(11) **EP 0 827 869 A1**
(43) Date de publication de la demande: **11.03.1998**
(21) Numéro de dépôt: 97402025.7
(22) Date de dépôt: 29.08.1997
(51) Int. Cl.: B60R 13/04, B60R 9/058

(54) **Enjoliveur de recouvrement pour gouttière de pavillon de véhicule**

(30) Priorité: 05.09.1996 FR 9610845
(71) Demandeur: AUTOMOBILES PEUGEOT, 75116 Paris (FR); AUTOMOBILES CITROEN, 92200 Neuilly-sur-Seine (FR)
(72) Inventeur: Veron-Delor, Laurent, 92250 La Garenne Colombes (FR)
(74) Mandataire: Berger, Helmut

(57) **Abrégé**

La présente invention concerne un enjoliveur de recouvrement pour gouttière de pavillon de véhicule.

L'enjoliveur de l'invention comporte au moins une trappe mobile (1) obturant une ouverture (9) permettant le passage d'un pied de galerie porte-bagages pour sa fixation dans la gouttière (2), la trappe étant munie d'un axe de basculement transversal (15) partageant ladite trappe en deux côtés à basculement limité, et d'un moyen de butée (17) contre l'enjoliveur (E) en position fermée prévu sur un côté seulement de la trappe pour permettre son basculement dans un seul sens, cet axe de basculement s'engageant dans au moins une première rainure sensiblement longitudinale (11) formée à l'intérieur de l'enjoliveur pour servir de guide au coulissement de la trappe sous l'enjoliveur.

L'invention s'applique notamment à l'industrie automobile.

## Description

La présente invention concerne un enjoliveur de recouvrement pour gouttière longitudinale de pavillon de véhicule notamment automobile, équipé de trappes coulissantes obturant des ouvertures permettant le passage des pieds de galerie porte-bagages pour leur fixation dans la gouttière.

On connaît déjà un profilé de recouvrement pour une gouttière emboîtée dans un toit de véhicule, pour la réception et la fixation des pieds d'appui d'une galerie de toit, qui traversent des ouvertures que peut fermer un coulisseau du profilé, ce coulisseau étant déplaçable à partir d'une position de fermeture, dans laquelle il affleure avec la peau externe du profilé, vers un deuxième plan parallèle plus bas par un mouvement de translation verticale à l'encontre de forces de rappel élastiques, le coulisseau pouvant alors coulisser longitudinalement à partir de ce deuxième plan vers une position cachée sous le profilé.

Toutefois, ce type de profilé de recouvrement présente une structure très complexe et de multiples ressorts de compression, ce qui augmente considérablement le coût de fabrication et de montage.

La présente invention a donc pour but d'éliminer les inconvénients précités et de proposer un enjoliveur de recouvrement pour gouttière de pavillon de véhicule, qui soit de structure plus simple et d'actionnement aisé.

A cet effet, l'invention a pour objet un enjoliveur de recouvrement pour gouttière longitudinale de pavillon de véhicule, équipé de trappes coulissantes obturant des ouvertures permettant le passage des pieds de galerie porte-bagages pour leur fixation dans la gouttière, chaque trappe étant longitudinalement déplaçable entre une position fermée dans laquelle la trappe obture complètement l'ouverture et une position escamotée dans laquelle la trappe est logée au moins partiellement sous l'enjoliveur, caractérisé en ce que la trappe est munie d'un axe de basculement transversal partageant ladite trappe en deux côtés à basculement limité et en sens opposés, et d'un moyen de butée contre l'enjoliveur en position fermée prévu sur un côté seulement de la trappe pour permettre le basculement de celle-ci dans un seul sens, ledit axe de basculement s'engageant dans au moins une première rainure sensiblement longitudinale formée à l'intérieur de l'enjoliveur pour servir de guide au coulissement de la trappe sous l'enjoliveur, ladite rainure s'étendant à partir d'un emplacement situé à la verticale de l'ouverture et à proximité de celle-ci pour recevoir ledit axe de basculement en position fermée de la trappe, vers le côté de la trappe qui bascule vers le bas, en s'incurvant doucement vers le bas jusqu'à un emplacement longitudinalement éloigné de l'ouverture, permettant d'escamoter au moins partiellement la trappe sous l'enjoliveur.

La trappe peut être munie d'un moyen élastique de rappel en butée contre l'enjoliveur, ledit moyen étant, d'une part, associé à l'un des deux côtés de la trappe, et d'autre part, en appui sur le bord inférieur de ladite première rainure.

Selon une autre caractéristique, la trappe peut être munie sur son côté qui bascule vers le bas, d'un moyen de blocage de la trappe en coulissement, qui s'engage dans au moins une seconde rainure formée à l'intérieur de l'enjoliveur, sensiblement en arc de cercle et centrée sur l'axe de basculement de la trappe en position fermée, ladite seconde rainure étant située au-dessus de la première rainure et débouchant dans celle-ci, de façon qu'après basculement de la trappe autour de son axe, le moyen de blocage s'engage dans la première rainure et puisse coulisser dans celle-ci avec ledit axe de basculement.

Cette seconde rainure peut être située à distance de l'ouverture de façon que le moyen de blocage serve également de moyen de butée contre l'enjoliveur en position fermée.

Selon encore une autre caractéristique de l'invention, la première rainure est constituée d'une portion inclinée se prolongeant par une portion rectiligne longitudinale plus basse.

On peut prévoir alors que la seconde rainure débouche dans la portion inclinée de la première rainure.

Le moyen de rappel élastique précité peut être un ressort monté coaxialement sur l'axe de basculement de la trappe et dont une branche s'engage dans la première rainure et une autre branche prend appui sous le côté de la trappe qui bascule vers le bas.

Selon une autre caractéristique, le diamètre de l'axe de basculement de la trappe est supérieur à la largeur de la deuxième rainure de façon qu'il ne puisse pas s'engager dans celle-ci.

On peut prévoir que le moyen de blocage soit constitué de deux ergots parallèles à l'axe de basculement et en saillie à l'arrière de la trappe pour s'engager respectivement dans ladite seconde rainure formée dans deux parois latérales opposées sous l'enjoliveur.

Selon encore une autre caractéristique, les extrémités respectives de l'axe de basculement s'engagent dans ladite première rainure formée dans deux parois latérales opposées sous l'enjoliveur.

L'invention sera mieux comprise, et d'autres buts, détails, avantages et caractéristiques de celle-ci apparaîtront plus clairement au cours de la description explicative qui va suivre d'un mode de réalisation particulier actuellement préféré de celle-ci, donné uniquement à titre illustratif et non limitatif, en référence aux dessins schématiques annexés, dans lesquels :

La figure 1 est une vue schématique partielle et en perspective d'un véhicule comportant deux enjoliveurs de recouvrement emboîtés dans les gouttières du pavillon.

La figure 2 est une vue partielle éclatée et en perspective de l'enjoliveur de l'invention.

La figure 3 est une vue en coupe longitudinale verticale de l'enjoliveur de l'invention en position de trappe fermée.

La figure 4 est une vue analogue à la figure 3, mais représentant la trappe en position escamotée avec un pied de galerie fixé dans la gouttière.

La figure 5 est une vue partielle et en perspective du pied de galerie de la figure 4.

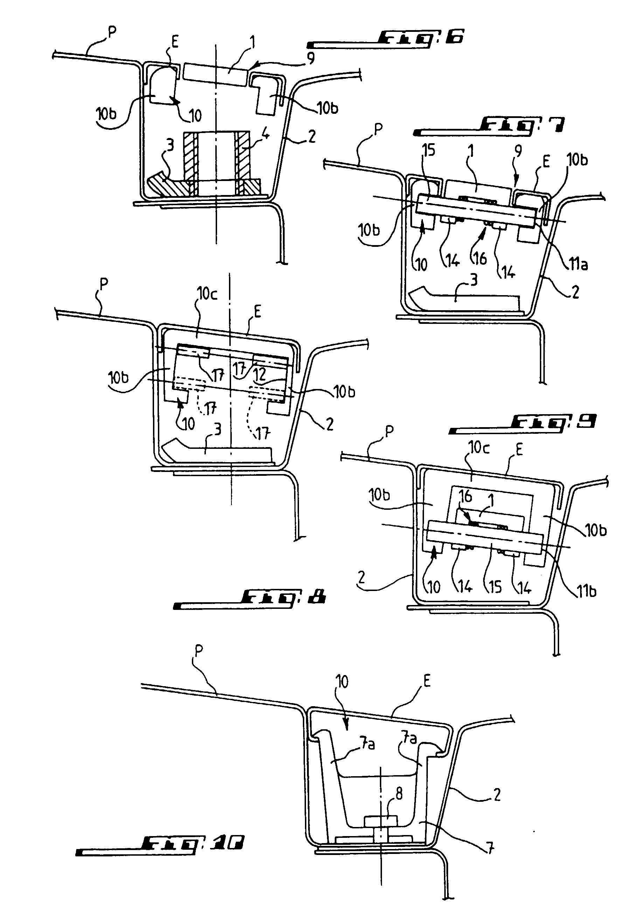

Les figures 6 à 8 sont des vues en coupe suivant les lignes VI-VI, VII-VII et VIII-VIII de l'enjoliveur de la figure 3 respectivement.

Les figures 9 et 10 sont des vues en coupe suivant les lignes IX-IX et X-X de l'enjoliveur de la figure 4 respectivement.

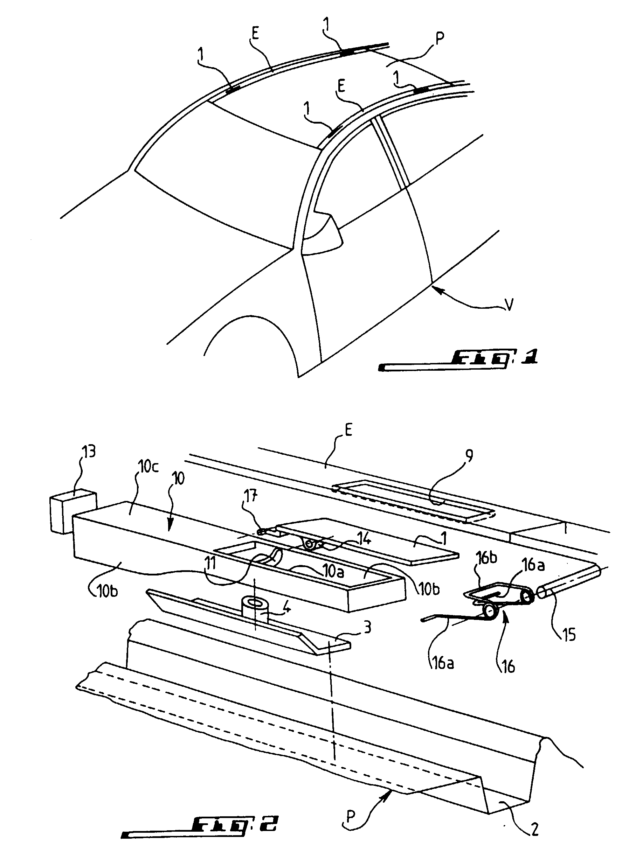

Suivant l'exemple de réalisation représenté sur les dessins, on voit sur la figure 1 un véhicule V comportant deux enjoliveurs longitudinaux latéraux E fixés sur le pavillon P de celui-ci. Chaque enjoliveur E comporte ici deux trappes mobiles 1.

L'enjoliveur E comme représenté sur la figure 2, est destiné à s'emboîter dans une gouttière correspondante 2 en forme de U en section transversale qui est formée dans le toit P du véhicule.

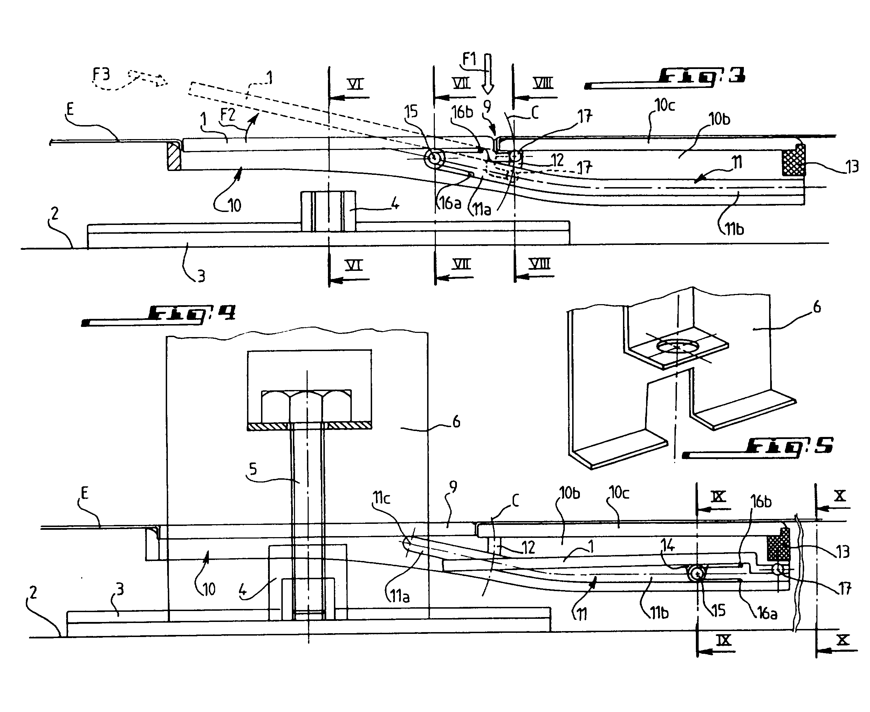

Dans la gorge de la gouttière 2 est destinée à être fixée, par exemple par soudage, une romaine 3 constituée d'une plaque dont fait verticalement saillie un canon intérieurement fileté 4 dans lequel vient se visser une vis de fixation 5 pour fixer un pied de galerie 6 dans la gouttière (voir figure 4). La romaine 3 et le pied de galerie associé 6 ne seront pas décrits plus en détails car ils sont connus en soi.

De la même manière, l'enjoliveur E qui recouvre la gouttière 2, est fixé d'une manière connue en soi dans celle-ci, par exemple par des agrafes plastiques 7 dont la portion inférieure centrale est attachée au fond de la gorge de la gouttière 2 par un pion plastique soudé 8 et dont les deux branches latérales sensiblement verticales en forme de crochets 7a retiennent les rebords longitudinaux inférieurs de l'enjoliveur E, comme représenté sur la figure 10.

L'enjoliveur E comporte au droit de chaque romaine 3, une ouverture sensiblement rectangulaire 9 pouvant être obturée par la trappe mobile 1 précitée. Sous l'enjoliveur E et à l'intérieur de la gouttière 2 est logé le bâti de support et de guidage 10 de la trappe 1. Ce bâti 10 comporte également une ouverture 10a qui coïncide avec celle 9 de l'enjoliveur E. Le bâti 10 est fixé à l'enjoliveur E par collage, agraphage ou tout autre moyen, mais peut également être fixé en variante directement à la gouttière 2. Le corps du bâti 10 présente une forme sensiblement parallélépipédique creuse dont les parois latérales longitudinales 10b présentent sur leur surface interne respectivement une première rainure 11 s'étendant sensiblement longitudinalement. Ici, les premières rainures 11 ne débouchent pas sur l'autre côté des parois latérales 10b, mais on peut prévoir en variante des rainures traversantes. De la même manière, les parois latérales 10b présentent sur leur surface interne une seconde rainure 12 sensiblement verticale comme mieux visible sur les figures 3, 4 et 8.

Les premières rainures 11 sont allongées avec une longueur de l'ordre de celle de la plaque formant la trappe 9 et présentent une première portion inclinée 11a qui se prolonge par une portion longitudinale plus basse 11b. Ainsi, chaque rainure 11 présente une forme générale s'incurvant progressivement et doucement vers le bas et à distance de l'ouverture 10a du bâti 10. L'extrémité supérieure 11c de la rainure 11 est fermée et située adjacente à un bord longitudinal de l'ouverture 10a et au voisinage de l'une des extrémités de celle-ci. A partir de cette extrémité supérieure 11c, la rainure 11 s'incline vers le bas en s'éloignant longitudinalement de l'ouverture 10a, puis se prolonge par la portion rectiligne longitudinale 11b. On voit sur les figures 3 et 4 que la portion rectiligne 11b n'est pas fermée à son extrémité opposée, pour simplifier le rainurage du bâti 10. On prévoit alors une pièce de butée de fin de course 13 à l'extrémité correspondante du bâti 10 pour empêcher que la trappe 1 ne sorte des rainures 11 lors de l'escamotage de celle-ci sous l'enjoliveur E.

La seconde rainure 12 s'étend suivant un arc de cercle C comme indiqué aux figures 3 et 4, qui est centré sur l'extrémité supérieure 11c de la rainure 11. Cet arc de cercle correspond à un basculement limité, par exemple inférieur à 30° et de préférence de l'ordre de 15°. La rainure 12 débouche dans la portion inclinée 11a de la rainure 11 et s'étend au-dessus de celle-ci jusqu'à la surface interne de la paroi supérieure 10c du bâti 10. La rainure 12 a une largeur moindre que celle de la rainure 11 pour les raisons qui seront indiquées plus loin.

Bien entendu, on pourrait prévoir le bâti 10 faisant partie intégrante de l'enjoliveur E.

La surface externe de la trappe 1 affleure, en position fermée, au même niveau que la peau externe de l'enjoliveur E, comme représenté sur la figure 3. Sous sa face inférieure et environ au premier quart de sa longueur, la trappe 1 comporte deux pontets ou paliers 14 destinés à recevoir rotatif un axe de basculement 15 dont les extrémités dépassent de la largeur de la trappe et s'engagent dans chaque rainure 11. Le diamètre de l'axe de basculement 15 est adapté à la largeur de la rainure 11 et supérieur à la largeur de la rainure 12 de façon qu'il ne puisse pas s'engager dans celle-ci.

Un ressort de rappel 16 est monté coaxialement sur l'axe de basculement 15 entre les deux pontets ou paliers 14. Le ressort 16 comporte deux branches inférieures 16a qui s'engagent dans les rainures 11 et appuient sur le fond de celles-ci et une branche mediane supérieure 16b qui appuie sur le dessous du côté de la trappe 1 qui bascule vers le bas.

La trappe 1 comporte enfin, à l'extrémité de son côté basculant vers le bas, deux ergots 17 en saillie vers l'arrière et sur les côtés, qui s'engagent dans la rainure 12, en position fermée de la trappe. La distance entre les ergots 17 et les pontets 14 correspond au rayon de l'arc de cercle C précité. Les deux ergots 17 sont ici transversalement alignés, mais on pourrait également les prévoir décalés.

On va maintenant brièvement décrire la mise en place d'un pied de galerie à travers l'enjoliveur de l'invention et dans la gouttière, en référence aux figures 3 et 4.

Pour ouvrir la trappe 1, l'utilisateur exerce d'abord une pression dans la direction de la flèche F1 sur la figure 3 sur l'une des extrémités de la trappe 1, de façon à provoquer son basculement autour de l'axe 15. Les ergots 17 suivent la trajectoire en arc de cercle C à l'intérieur de la rainure 12 jusqu'à tomber dans la rainure longitudinale 11. Le trajet des ergots 17 est visible également sur la figure 8 comme indiqué en traits interrompus. Les ergots 17 étant logés dans la rainure 12, tout coulissement de la trappe est dans un premier temps empêché et le seul mouvement possible pour la trappe 1 est donc un basculement limité autour de son axe 15. Seul un basculement dans le sens de la flèche F2 est autorisé car, dans l'autre sens, les ergots 17 sont en butée contre la paroi supérieure 10c du bâti. Ce mouvement de basculement s'effectue à l'encontre de la force élastique de rappel du ressort 16 qui repousse la trappe 1 en position fermée, si la pression est relâchée à ce moment. On notera que le basculement de la trappe 1 est limité par les ergots 17 venant en butée sur le fond des rainures 11. Lorsque les ergots 17 viennent en butée sur le fond des rainures 11, comme indiqué en traits mixtes sur la figure 3, l'utilisateur peut exercer une poussée dans la direction de la flèche F3 sur l'extrémité opposée de la trappe 1 et dans le plan de celle-ci. La trappe 1 s'escamote alors progressivement sous l'enjoliveur E, avec son axe 15 et ses ergots 17 qui coulissent ensemble dans la rainure de guidage 11, jusqu'à ce que l'accès à la romaine 3 soit découvert.

Dans la position illustrée sur la figure 4, la trappe 1 repose presque entièrement sous l'enjoliveur E dans un plan sensiblement parallèle à l'ouverture 9 et est maintenue dans cette position par la branche supérieure 16b du ressort 16 qui sollicite les ergots 17 en appui contre le bord supérieur des rainures 11. On voit également que la pièce de butée 13 empêche l'extrémité en regard de la trappe 1 de sortir du bâti 10.

La dimension longitudinale de la rainure 11 sera calculée de manière que la trappe 1 puisse s'escamoter suffisamment sous l'enjoliveur E de manière à ne pas gêner l'introduction du pied de galerie 6 à travers l'ouverture 9 et son vissage sur le canon 4 de la romaine 3.

Pour refermer la trappe 1, il suffit d'effectuer les opérations précédentes en sens inverse. En bref, l'utilisateur tire sur l'extrémité accessible de la trappe 1 en sens opposé à la flèche F3 jusqu'à ce que l'axe 15 vienne en butée à l'extrémité supérieure 11c de la rainure 11. Les ergots 17 se retrouvent alors à la verticale des rainures 12 et en relâchant simplement la trappe 1, le ressort de rappel 16 repousse vers le haut les ergots 17 qui s'engagent dans la rainure 12 jusqu'à venir en butée contre la face interne de la paroi supérieure 10c du bâti 10.

Bien que l'invention ait été décrite en liaison avec un mode de réalisation particulier, il est bien évident qu'elle n'y est nullement limité et qu'elle comprend tous les équivalents techniques des moyens décrits ainsi que leurs combinaisons si celles-ci entrent dans le cadre de l'invention.

## Revendications

1. Enjoliveur (E) de recouvrement pour gouttière longitudinale (2) de pavillon (P) de véhicule, équipé de trappes coulissantes (1) obturant des ouvertures (9) permettant le passage des pieds de galerie porte-bagages (6) pour leur fixation dans la gouttière, chaque trappe étant longitudinalement déplaçable entre une position fermée dans laquelle la trappe obture complètement l'ouverture et une position escamotée dans laquelle la trappe est logée au moins partiellement sous l'enjoliveur, caractérisé en ce que la trappe est munie d'un axe de basculement transversal (15) partageant ladite trappe en deux côtés à basculement limité et d'un moyen de butée (17) contre l'enjoliveur en position fermée prévu sur un côté seulement de la trappe pour permettre le basculement de celle-ci dans un seul sens, ledit axe de basculement s'engageant dans au moins une première rainure sensiblement longitudinale (11) formée à l'intérieur de l'enjoliveur pour servir de guide au coulissement de la trappe sous l'enjoliveur, ladite rainure s'étendant à partir d'un emplacement (11c) situé à la verticale de l'ouverture et à proximité de celle-ci pour recevoir ledit axe de basculement en position fermée de la trappe, vers le côté de la trappe qui bascule vers le bas, en s'incurvant doucement vers le bas jusqu'à un emplacement longitudinalement éloigné de l'ouverture, permettant d'escamoter au moins partiellement la trappe sous l'enjoliveur.

2. Enjoliveur selon la revendication 1, caractérisé en ce qu'il est muni d'un moyen élastique (16) de rappel en butée contre l'enjoliveur, ledit moyen étant, d'une part, associé à l'un des deux côtés de la trappe (1), et d'autre part, en appui sur le bord inférieur de ladite première rainure (11).

3. Enjoliveur selon la revendication 2, caractérisé en ce que le moyen de rappel précité est un ressort (16) monté coaxialement sur l'axe de basculement (15) de la trappe (1) et dont une branche (16a) s'engage dans la première rainure (11) et une autre branche (16b) prend appui sous le côté de la trappe qui bascule vers le bas.

4. Enjoliveur selon l'une des revendications précédentes, caractérisé en ce que la trappe est munie sur son côté qui bascule vers le bas, d'un moyen de blocage (17) de la trappe en coulissement, qui s'engage dans au moins une seconde rainure (12) formée à l'intérieur de l'enjoliveur, sensiblement en arc de cercle (C) et centrée sur l'axe de basculement (15) de la trappe en position fermée, ladite seconde rainure étant située au-dessus de la première rainure (11) et débouchant dans celle-ci, de façon qu'après basculement de la trappe autour de son axe, le moyen de blocage s'engage dans la première rainure et puisse coulisser dans celle-ci avec ledit axe de basculement.

5. Enjoliveur selon la revendication 4, caractérisé en ce que ladite seconde rainure (12) est située à distance de l'ouverture (9) de façon que le moyen de blocage serve également de moyen de butée (17) contre l'enjoliveur en position fermée.

6. Enjoliveur selon l'une des revendications précédentes, caractérisé en ce que la première rainure (11) est constituée d'une portion inclinée (11a) se prolongeant par une portion rectiligne longitudinale plus basse (11b).

7. Enjoliveur selon les revendications 4 et 6, caractérisée en ce que la seconde rainure (12) débouche dans la portion inclinée (11a) de la première rainure (11).

8. Enjoliveur selon la revendication 4 caractérisé en ce que le diamètre de l'axe de basculement (15) de la trappe est supérieur à la largeur de la seconde rainure (12) de façon qu'il ne puisse pas s'engager dans celle-ci.

9. Enjoliveur selon l'une des revendications précédentes, caractérisé en ce que l'axe de basculement (15) de la trappe (1) se trouve approximativement au premier quart de la longueur de celle-ci à partir de son côté qui bascule vers le bas.

10. Enjoliveur selon la revendication 4, caractérisé en ce que le moyen de blocage est constitué de deux ergots (17) parallèles à l'axe de basculement (15) et en saillie à l'arrière de la trappe (1) pour s'engager respectivement dans ladite seconde rainure (12) formée dans deux parois latérales opposées (10b) sous l'enjoliveur (E).

11. Enjoliveur selon l'une des revendications précédentes, caractérisé en ce que les extrémités respectives de l'axe de basculement (15) s'engagent dans ladite première rainure (11) formée dans deux parois latérales opposées (10b) sous l'enjoliveur.
